(19) **Europäisches Patentamt / European Patent Office / Office européen des brevets**

(11) **EP 1 225 741 B1**

(12) **EUROPEAN PATENT SPECIFICATION**

(45) Date of publication and mention
of the grant of the patent:
**22.08.2007 Bulletin 2007/34**

(51) Int Cl.:
***H04L 29/06*** *(2006.01)*

(21) Application number: **00123673.6**

(22) Date of filing: **30.10.2000**

(54) **High speed interconnection for embedded systems within a computer network**

Hochgeschwindigkeitsverbindung für eingebettete Systeme in einem Rechnernetzwerk

Interconnection à grande vitesse pour systèmes intégrés dans un réseau d'ordinateurs

(84) Designated Contracting States:
**AT CH DE ES FR GB LI**

(43) Date of publication of application:
**24.07.2002 Bulletin 2002/30**

(73) Proprietor: **SIEMENS AKTIENGESELLSCHAFT**
**80333 München (DE)**

(72) Inventors:
• **Birkenmaier, Rainer**
**72516 Scheer (DE)**
• **Graebner, Oliver**
**80636 München (DE)**
• **Kuefner, Holger, Dr.**
**83026 Rosenheim (DE)**

(56) References cited:
**WO-A-00/24165**

• **A.S. TANENBAUM: "Computer Networks" 1996 , PRENTICE HALL PTR , UPPER SADDLE RIVER, NEW JERSEY XP002166384 * page 202, paragraph 4 - page 219, paragraph 1 ***

EP 1 225 741 B1

**Description**

The present invention relates to a process for transmitting data from a first system to a second system within a local area computer network using Ethernet communication technology and to a voting mechanism in an error-tolerant system within a computer network making use of such a process for transmitting data, wherein

- a number of different computation systems carry out the same calculation and every result of a calculation from every computation system is transmitted to be compared to a voter system,
- said voter system comparing the different results and reporting a result of the comparison back to said different computation systems involved, wherein

said computation systems do not start any further calculations until they have received the result of the voting process.

In the field of local Ethernet communication, modern computer networks, in particular in office communication, mainly use network protocols, in particular TCP/IP, which are not optimized for this specific type of communication, but are designed predominantly for long-distance networks.

The overhead produced in consequence slows down the overall communication process. In addition, special mechanisms have to be modeled at the application level to achieve a synchronization of communications systems. Essentially, this results in three problems (a, b, c) which are to be solved by this invention.

a) efficient communication, which relates essentially to the response times and the data throughput rate, but also takes account of other areas of the required protocol elements.
In the past, an improvement in the efficiency of communication has been achieved mainly by using faster hardware. Another approach is to attempt to improve the efficiency by reimplementation of existing protocol stacks or parts of protocol stacks. However, in that case, the fundamental problem still remains that the protocol itself is not optimized for the purpose.
b) reliable communication, when data are transmitted, they either arrive correctly or a corresponding error is signaled. In either case, the application has thus to be informed of the data transmission status.
Reliable communication nowadays is either provided by the protocol stack or must be implemented by the application itself.
c) distributed synchronization of processes for voting mechanisms in error-tolerant systems.

Distributed synchronization has up until now been achieved only at the application level causing problems with respect to the implementation and the performance.

The international application WO 00/24165 discloses a method for transmitting data from a first to a second system within a local area network using Ethernet technology. Data packets are identified by an address existing in the Ethernet protocol and a sequence number. Received packets are acknowledged to the sending system and a data packet is retransmitted on timeout for an acknowledgement to be received.

An object of the present invention is thus to provide a process for transmitting data within a local area computer network that improves efficiency and reliability of the transmission.

The aforementioned object is achieved by a voting apparatus according to claim 1.

According to an embodiment of the present invention with a process for transmitting data from a first system to a second system within a local area computer network using Ethernet communication technology, wherein existing protocol stacks within local Ethernet communication are redesigned in a way that functions relating to use in long-distance networks, in particular routing capability and/or complex name services such as DNS for TCP/IP and/or multiple checksums, are eliminated by means of

- data packets being identified by a unique identification-number built of an address existing in Ethernet protocol, in particular Medium-Access-Control-addresses, and of a sequence-number, wherein
- received packets are acknowledged to the sending system by acknowledge-IDs, wherein
- a data packet is retransmitted by the sending system on timeout for an acknowledge-ID to be received.

According to the present invention those functions can be used more efficiently and more easily if they are implemented in the protocol stack itself as described.

In a first advantageous embodiment of the process for transmitting data according to the present invention it has turned out to be especially advantageous if unique identification-numbers are generated by increasing the identification-number of an actual packet for obtaining a unique identification-number for every following packet.

In another advantageous embodiment of the process for transmitting data according to the present invention said sending system of a data packet frees memory for this data packet within a data buffer only after having validly received the corresponding acknowledge-ID.

Under these conditions it has turned out to be especially advantageous if said receiving system of a data packet forgets an identification-number of a data packet only in case of the identification-number being smaller than the one of the last acknowledged acknowledge-ID provided by a sending system.

Furthermore, it has turned out to be especially advantageous if a timeout for an acknowledge-ID to be received is calculated by means of a

- time a data packet was sent, a
- receive time of the sending system and a
- maximum processing time of the sending system to get a schedule and to start sending a data packet.

Preferably, the receive time is calculated from

- twice a maximum Ethernet travel time for a data packet
- in addition with a maximum processing time in the receiving system.

In another advantageous embodiment of the process for transmitting data according to the present invention an error of transmission is detected by a sending system on a number of retransmissions of a data packet exceeding a preset number of attempts.

Alternatively, an error of transmission is detected by a receiving system on a timeout if an identification-number has to be kept longer than a preset time.

The advantages achieved with the present invention are especially valuable if every system within the local area computer network is an embedded system.

In order to handle said acknowledge-IDs efficiently they are transmitted being part of a data packet.

Under these conditions it has turned out to be especially advantageous if a data packet sent by a sending system also comprises the last acknowledged acknowledge-ID.

Another object of the invention is to implement a voting mechanism in an error-tolerant system within a computer network making use of the aforementioned process for transmitting data in a simple and efficient manner.

In an advantageous embodiment of the voting mechanism according to the present invention a result of a calculation from a computation system being a requesting system within the network is transmitted to said voter system using a single system call that is not returned until the voting has been completed in the background and a result is present and fed back to said computation system.

By this feature it is achieved that the handling of a voting process is highly simplified. A single call is sufficient and the process of voting is processed in the background, and is transparent to the application.

In known voting mechanisms a more critical factor is the fact that this procedure usually forces the application having to wait actively.

To avoid this problem, in another advantageous embodiment of the voting mechanism according to the present invention a process that issued said system call is placed in a not-ready-queue within said computation system until the system call returns, thus, avoiding said computation system having to wait actively for the result of the voting process.

It has turned out to be especially advantageous if it is ensured that all the different computation systems involved send the result of the same calculation to the voter system.

In order to avoid a Single Point off Failure, said voter system comparing the different results and reporting a result of the comparison back to said different computation systems involved is distributed within the computer network.

Further advantages and details of the present invention are described in the following preferred embodiments together with the drawings. In the drawings, similar elements with the same function are designated with the same reference characters, but similar elements need not necessarily be the same.

FIG 1     shows a block schematic of a protocol stack according to this invention embedded in Windows CE ®,

FIG 2     shows most important parts of a data packed,

FIG 3     shows a time diagram of a data transmission according to the invention,

FIG 4     shows a time diagram of a data transmission according to the invention with a data packet lost,

FIG 5     shows a time diagram of a data transmission according to the invention with an acknowledge-ID lost and

FIG 6     shows a block schematic of a voting mechanism with a system call according to the invention.

The protocol stack within Ethernet communication in a computer network according to the present invention supports only functionality which is absolutely essential for the application. In particular, it ignores all those functions relating to use in long-distance networks, e.g. routing capability. The implementation is not only matched to local communication, but is also optimized to the communication technology being used, Ethernet. There is no need for any name service, such as DNS for TCP/IP. The Medium-Access-Control addresses MAC from Ethernet are used instead.

In traditional protocols, such as TCP/IP mechanisms often exist which are used more than once, but whose duplicated utilization does not result in increased usefulness. For example, this is done in the checksums TCP/IP. These are used to check the correctness of the received data. At the Ethernet level, they are implemented in hardware and are thus virtually free of any latency time. TCP/IP, checksums are calculated again repeatedly at two further levels, which means additional and unnecessary complexity when Ethernet is used as a transport medium.

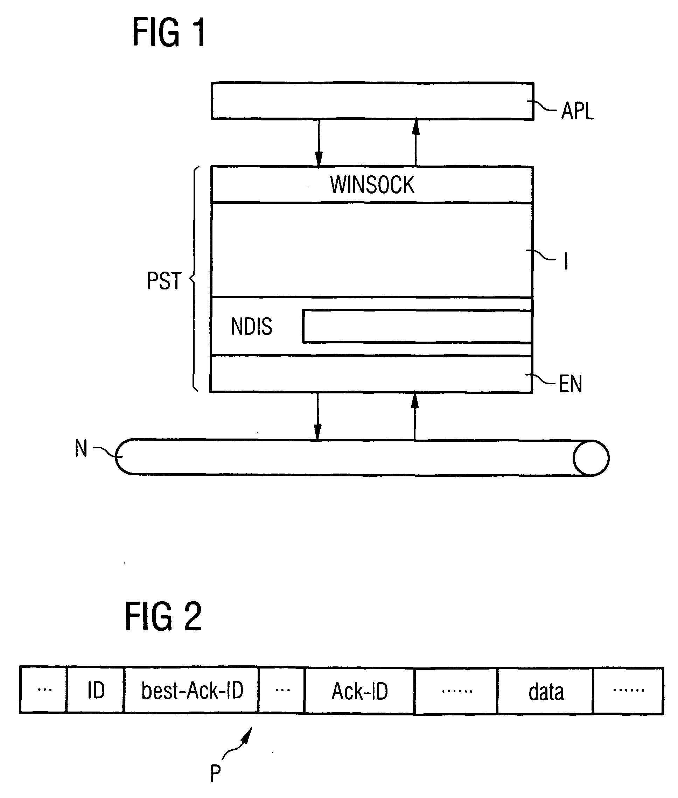

The invention thus makes use of an extremely flat and hence highly efficient protocol stack as is shown in FIG 1 which uses the example of Windows CE ® to show how the protocol stack according to the present invention can be integrated in an operating system.

An application APL is shown that communicates via a protocol stack PST comprising the high speed interconnection protocol I of the present invention and Ethernet communication technology EN for connection with a computer network N.

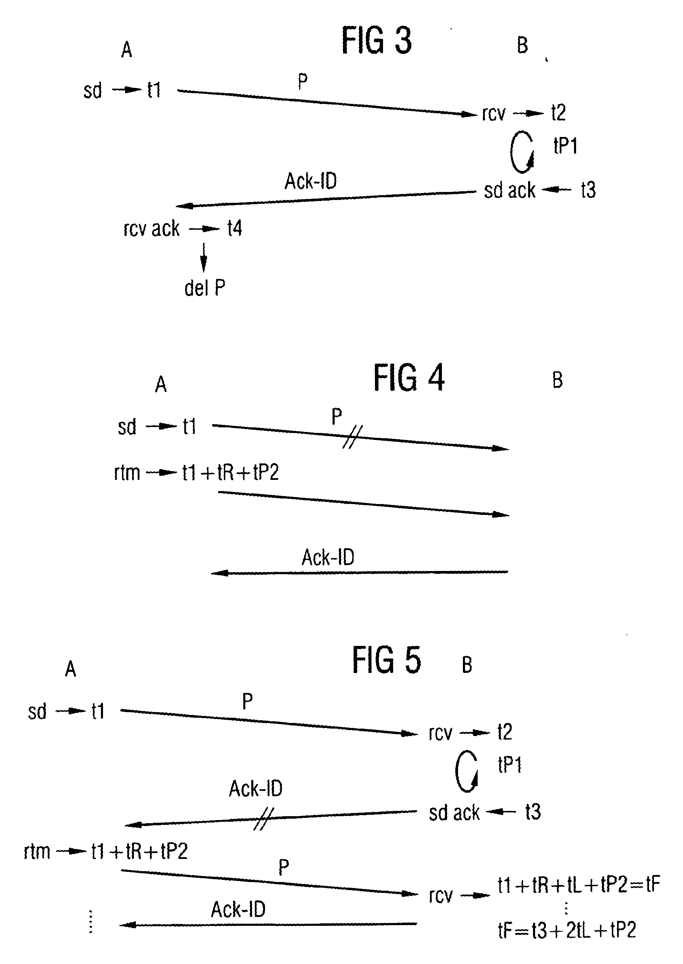

FIG 2 shows an example of a data packet P which is used for high speed interconnection according to the invention. Different systems within the computer network N transmit such data packets P for achieving high speed interconnection of those systems in a way that is going to be explained according to FIGs 3 to 5.

The data packets P as shown in FIG 2 are identified by a unique identification number ID built of the aforementioned MAC Ethernet address that is already in the Ethernet packet and a sequence number seq#. By using the Ethernet address addressing can be realized by making use of the Ethernet socket-interface.

Usually both communications systems A and B are sending as well as receiving systems. That is why it is advantageous if, as shown in FIG 2, each data packet P, apart from application data, comprises an acknowledge identification number Ack-ID as well as the last acknowledge ID 'last-Ack-ID'. The acknowledge information being part of a data packet makes the interconnection more efficient. Of course, it is also possible to send an acknowledge information in a separate packet to the sending system A.

For explanation purposes the following description uses communications system A only as sending system and communications system B only as receiving system.

In FIG 3 to 5 it is thus described how data packets P are transmitted from a first system A being the sending system to a second system B being the receiving system.

The following time references are used for description:

| | |
|---|---|
| t1 | time a data packet P is sent |
| t2 | receive time of a receiving system |
| tR | receive time of a sending system |
| tP1 | maximum processing time in a receiving system |
| tP2 | maximum processing time of a sending system |
| | to get a schedule and to start sending |
| t3 | time the Ack is sent |
| t4 | time the Ack is received |
| tL | maximum Ethernet travel time of a data packet transmitted over the computer network N |

FIG 3 shows a transmission of a data packet P working correctly without any packet loss. A communications system A sends 'sd' a data packet P at the timt t1 which is received 'rcv' by a communications system B at the time t2. The received data packet is then processed by the receiving system B within a processing time tP1 before an acknowledge information Ack-ID is sent 'sd ack' back to the communications system A at a time t3 where this acknowledge information is received 'rcv ack' at a time t4. The acknowledge information Ack-ID can be sent being part of a data packet P as described in FIG 2.

Every communications system A and B can comprise a buffer memory for storing the data of multiple data packets to be transmitted. A part of this buffer memory used for the data packet P having been sent is freed 'del P' only on receiving the correct acknowledge information Ack-ID.

FIG 4 shows the same way of transmitting data according to the invention but in a case of the data packet P being dropped during transmission to communication system B. As the sending system A does not receive an acknowledge information for the data packet P having been sent 'sd' during a time expected, it has to be retransmitted 'rtm' on timeout.

A timeout for an acknowledge-ID to be received is calculated by the time t1 the data packet P was sent, the receive time tR of the sending system A and the maximum processing time tP2 of the sending system A to get a schedule and to start sending a data packet according to the following formula:

$$\texttt{timeout = t1 + tR + tP2 \quad (1)}$$

Preferably, the receive time tR is calculated from twice a maximum Ethernet travel time tL for a data packet in addition with the maximum processing time tP1 in the receiving system B according to the following formula:

$$\texttt{tR = 2 * tL + tP1 \quad (2)}$$

Therefore the timeout can be calculated as follows:

$$\texttt{timeout = t1 + 2 * tL + tP1 + tP2 \quad (3)}$$

FIG 5 shows the same way of transmitting data as in FIG 3 according to the invention in a case the data packet P having been transmitted correctly but the acknowledge information Ack-ID being dropped during transmission back to communication system A. As the sending system A does not receive an acknowledge information having been sent 'sd ack' during a time expected, the data packet P again has to be retransmitted 'rtm' on timeout as calculated in formulas (1) to (3).

When the receiving system B receives 'rcv' the data packet P for the second time it has to resend the acknowledge information Ack-ID but to take into consideration that the data packet P has already been received correctly. By the means of the unique Ids of every data packet the receiving system B is able to recognize that the same data packet P has already been received earlier.

The time tF a data packet P is received for the second time by the receiving system B according to formula (1) is calculated as follows:

$$\texttt{tF \quad = t1 + tR + tL + tP2 \qquad (4)}$$

With formula (2) this can be transformed into:

$$\texttt{tF \quad = t1 + 3 * tL + tP1 + tP2 \qquad (5)}$$

The time t1 is not known by the receiving system B but it can be calculated in worst case as

$$\texttt{t1 = t2 - tL \quad (6)}$$

so that tF becomes

$$\texttt{tF \quad = t2 + 2 * tL + tP1 + tP2. \qquad (7)}$$

With

$$\texttt{t3 = t2 + tP1 \quad (8)}$$

it results the following formula for calculating the time tF of receiving a data packet P for the second time:

$$tF = t3 + 2 * tL + tP2. \qquad (9)$$

The receiving system B forgets an identification number ID of a data packet P only in case of this ID being smaller than the last acknowledged Ack-ID provided by the sending system A as part of a data packet P according to:

$$ID =< last-Ack-ID. \qquad (10)$$

The sending system A on the one hand recognizes an error of the transmission on too many retransmits. Therefore a number of attempts is preset that must not be exceeded for a correct transmission of data packets P.

The receiving system B on the other hand recognizes a transmission error on timeout if an ID has to be kept too long.

An advantage of the data transmission according to the described invention in the field of reliable communication is that datagram communication is protected in the protocol itself as described above in FIGs 3 to 5 in contrast, for example, to TCP/IP. Furthermore, protection mechanisms are used which are matched to the requirements of local communication. Under the conditions described above, on error the complete state of the system can be reconstructed in any case.

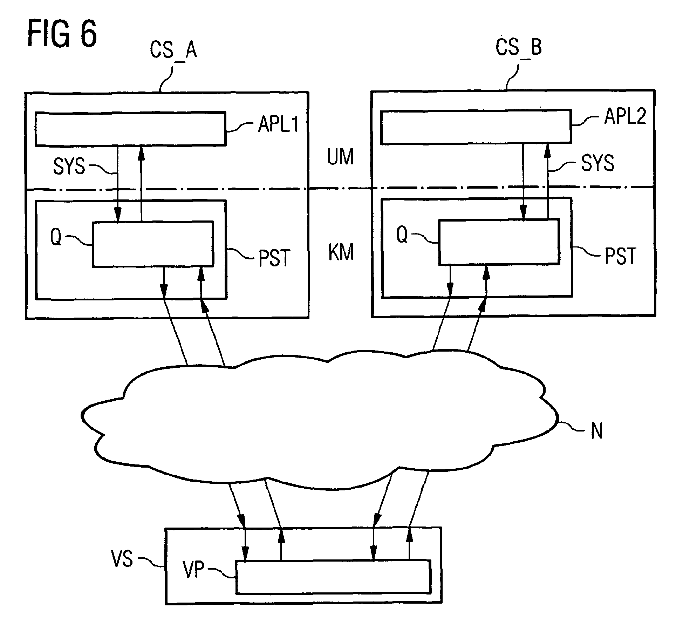

With the high speed and reliable interconnection as described above it is possible to implement a protocol which supports distributed synchronization for voting mechanisms. In a voting mechanism, as it is shown in FIG 6, a number of different computation systems CS_A, CS_B send the result of a calculation which is intended to be compared to a voter system VS, all systems CS_A, CS_B and VS being communications partners within a local computer network N communicating as described above.

This voter system VS compares the results and reports the result of the comparison back to the different computation systems CS_A, CS_B involved. For this comparison, it is ensured that all the different computation systems CS_A, CS_B involved send the result of the same calculation to the voter system VS, and that they do not start any further calculations until they have received the result of the voting process VP.

In other words, the different computation systems CS_A, CS_B involved are synchronized in time. In this invention, this voting mechanism is implemented in the protocol stack PST of the different computation systems CS_A, CS_B itself being part of the kernel mode KM or, in other words, of the operating system, e.g. Windows CE ®.

The applications APL1, APL2 of the different computation systems CS_A, CS_B are located in the user mode UM and communicate with the protocol stack PST including the voting mechanism using a system call SYS of the type 'send back result of voting'.

Thus, for a synchronization in time no system call SYS is returned until the voting has been completed and a result is present, which is fed back to the different computation systems CS_A, CS_B involved.

This essentially results in two advantages over an implementation in the application as is state of the art. Firstly, the handling of a voting process VP is highly simplified, a single system call SYS is sufficient and everything else is processed in the background (kernel mode KM), and is transparent to the application. However, a more critical factor is the fact that this procedure avoids the application having to wait actively. Instead of this the requesting process, as is normal for a system call, is placed in the not-ready queue Q by a process scheduler until the system call SYS returns. The process is thus stopped throughout the entire waiting period, which saves processor time and frees the processor to carryout other processes. Once again, this functionality can be used very easily, by means of a simple function call SYS.

FIG 6 shows how a typical system function call SYS of the type 'send back result of voting' function takes place. In order to keep the illustration simple and comprehensible, the voter system VS is shown as a single node within the network N although, in fact, it is preferably to be distributed in order to avoid a Single Point off Failure.

The invention firstly realizes the movement of the distributed synchronization to the protocol stack PST and, secondly, the integration of this functionality in an efficient, high-speed and reliable interconnection protocol I, as it is required in embedded, fault-tolerant systems.

However, this does not mean that the protocol I can be used only for distributed synchronization. Due to its advantages (efficiency and reliability), it is a valuable alternative to other protocols, even in normal operation.

The above description of preferred embodiments of the present invention is given for the purpose of illustration, but is not exhaustive. Nor is the present invention limited to the precise form described here, but instead numerous modifications and changes are also possible within the context of the above disclosure.

Preferred embodiments have been described to illustrate the basic details of the present invention and practical applications to enable those skilled in the art to implement this invention. Numerous additional modifications may be implemented for special applications.

**Claims**

1. A voting apparatus for an error-tolerant system within a computer network (N) wherein

   - a number of different computation systems (CS_A, CS_B) carry out the same calculation and every result of a calculation from every computation system (CS_A, CS_B) is transmitted to be compared to a voter system (VS),
   - said voter system (VS) comparing the different results and reporting a result of the comparison back to said different computation systems (CS_A, CS_B) involved, and wherein said computation systems do not start any further calculations until they have received the result of the voting process (VP), the apparatus comprising a protocol stack (PST) for communication within the network (N)

   **characterised in that**
   a distributed synchronization in time of said different computation systems (CS_A, CS_B) is implemented as part of the protocol stack (PST).

2. Voting apparatus according to claim 1,
   comprising first means in such a way that a result of a calculation from a computation system (CS_A, CS_B) being a requesting system within the network (N) is transmitted to said voter system (VS) using a single system call (SYS) that is not returned until the voting has been completed in the background (KM) and a result is present and fed back to said computation system (CS_A, CS_B).

3. Voting apparatus according to claim 2,
   comprising second means in such a way that a process that issued said system call (SYS) is placed in a not-ready-queue (Q) within said computation system (CS_A, CS_B) until the system call (SYS) returns, thus, avoiding said computation system (CS_A, CS_B) having to wait actively (UM) for the result of the voting process (VP).

4. Voting apparatus according to claim 1 or 2 or 3, comprising third means in such a way that it is ensured that all the different computation systems (CS_A, CS_B) involved send the result of the same calculation to the voter system (VS).

**Patentansprüche**

1. Abstimmungsvorrichtung für ein fehlertolerantes System innerhalb eines Rechnernetzwerkes (N), wobei

   - mehrere verschiedene Berechnungssysteme (CS_A, CS_B) dieselbe Berechnung ausführen und jedes Ergebnis einer Berechnung von jedem Berechnungssystem (CS_A, CS_B) zu einem Abstimmsystem (VS) übertragen wird, um verglichen zu werden,
   - das besagte Abstimmsystem (VS) die verschiedenen Ergebnisse vergleicht und ein Ergebnis des Vergleiches zu den besagten verschiedenen beteiligten Berechnungssystemen (CS_A, CS_B) rückmeldet, und wobei die besagten Berechnungssysteme keine weiteren Berechnungen beginnen, bis sie das Ergebnis des Abstimmungsprozesses (VP) empfangen haben, wobei die Vorrichtung einen Protokollstapel (PST) für die Kommunikation innerhalb des Netzwerkes (N) umfasst,

   **dadurch gekennzeichnet, dass**
   eine verteilte zeitliche Synchronisation der besagten verschiedenen Berechnungssysteme (CS_A, CS_B) als Teil des Protokollstapels (PST) implementiert ist.

2. Abstimmungsvorrichtung nach Anspruch 1,
   welche erste Mittel auf eine solche Weise umfasst, dass ein Ergebnis einer Berechnung von einem Berechnungssystem (CS_A, CS_B), welches ein anforderndes System innerhalb des Netzwerkes (N) ist, zu dem besagten Abstimmsystem (VS) unter Verwendung eines einzigen Systemaufrufes (SYS) übertragen wird, welcher nicht zurückgesendet wird, bis die Abstimmung im Hintergrund (KM) abgeschlossen worden ist und ein Ergebnis vorliegt und an das besagte Berechnungssystem (CS_A, CS_B) rückgemeldet wird.

**3.** Abstimmungsvorrichtung nach Anspruch 2,
welche zweite Mittel auf eine solche Weise umfasst, dass ein Prozess, welcher den besagten Systemaufruf (SYS) ausgegeben hat, in eine Nicht-Bereit-Warteschlange (Q) innerhalb des besagten Berechnungssystems (CS_A, CS_B) eingereiht wird, bis der Systemaufruf (SYS) zurückkommt, wodurch vermieden wird, dass das besagte Berechnungssystem (CS_A, CS_B) aktiv (UM) auf das Ergebnis des Abstimmungsprozesses (VP) warten muss.

**4.** Abstimmungsvorrichtung nach Anspruch 1 oder 2 oder 3, welche dritte Mittel auf eine solche Weise umfasst, dass sichergestellt ist, dass alle verschiedenen beteiligten Berechnungssysteme (CS_A, CS_B) das Ergebnis derselben Berechnung zu dem Abstimmsystem (VS) senden.

**Revendications**

**1.** Appareil de vote pour un système tolérant aux erreurs dans un réseau d'ordinateurs (N) dans lequel

- un certain nombre de différents systèmes de calcul (CS_A, CS_B) effectuent le même calcul et chaque résultat d'un calcul en provenance de chaque système de calcul (CS_A, CS_B) est transmis pour être comparé à un système de votant (VS),
- ledit système de votant (VS) comparant les différents résultats et renvoyant un résultat de la comparaison en retour auxdits différents systèmes de calcul (CS_A, CS_B) impliqués, et dans lequel lesdits systèmes de calcul ne commencent pas de quelconques autres calculs avant d'avoir reçu le résultat du processus de vote (VP), l'appareil comprenant une pile de protocoles (PST) pour une communication au sein du réseau (N)

**caractérisé en ce que**
une synchronisation distribuée dans le temps desdits différents systèmes de calcul (CS_A, CS_B) est mise en oeuvre comme une partie de la pile de protocoles (PST).

**2.** Appareil de vote selon la revendication 1,
comprenant un premier moyen de telle manière qu'un résultat d'un calcul en provenance d'un système de calcul (CS_A, CS_B) étant un système de requête au sein du réseau (N) est transmis audit système de votant (VS) en utilisant un appel système (SYS) unique qui n'est pas retourné avant que le vote ne soit terminé en tâche de fond (KM) et qu'un résultat soit présent et envoyé en retour audit système de calcul (CS_A, CS_B).

**3.** Appareil de vote selon la revendication 2,
comprenant un deuxième moyen de telle manière qu'un processus qui a émis ledit appel système (SYS) est placé dans une file d'attente-non-prêts (Q) au sein dudit système de calcul (CS_A, CS_B) jusqu'à ce que ledit appel système (SYS) soit retourné, ainsi, évitant que ledit système de calcul (CS_A, CS_B) ne doive attendre activement (UM) le résultat du processus de vote (VP).

**4.** Appareil de vote selon la revendication 1 ou 2 ou 3,
comprenant un troisième moyen de telle manière qu'il est assuré que tous les différents systèmes de calcul (CS_A, CS_B) impliqués envoient le résultat du même calcul au système de votant (VS).

## FIG 1

## FIG 2

## FIG 3

A                    B

sd → t1 ———— P ————→ rcv → t2

$\circlearrowright$ tP1

Ack-ID ←———————— sd ack ← t3

rcv ack → t4

↓

del P

## FIG 4

A                    B

sd → t1 ———— P —//———→

rtm → t1+tR+tP2

————————————→

Ack-ID ←————————————

## FIG 5

A                    B

sd → t1 ———— P ————→ rcv → t2

$\circlearrowright$ tP1

Ack-ID ←——//—— sd ack ← t3

rtm → t1+tR+tP2

———— P ————→ rcv → t1+tR+tL+tP2=tF

Ack-ID ←————————

tF=t3+2tL+tP2

## FIG 6

CS_A

CS_B

APL1

APL2

UM

SYS

SYS

Q

Q

KM

PST

PST

N

VS

VP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0024165 A